# EUROPEAN PATENT APPLICATION

(11) **EP 4 768 229 A1**
(43) Date of publication of application: **01.07.2026**
(21) Application number: 24223266.8
(22) Date of filing: 24.12.2024
(51) Int. Cl.: B29C 65/16, F21V 17/10, B29L 31/00

(54) **LAMP ASSEMBLY OF A VEHICLE, COMPONENT OF A LAMP ASSEMBLY AND METHOD OF JOINING COMPONENTS OF A LAMP ASSEMBLY**

(71) Applicant: OPmobility Lighting Germany GmbH, 80807 München (DE)
(72) Inventor: Herrera, Juan, 742 42 enov u Nového Ji ína (CZ); Sawant, Umesh, 742 42 enov u Nového Ji ína (CZ); Morris, Steve, 742 42 enov u Nového Ji ína (CZ)
(74) Representative: LLR

(57) **Abstract**

A lamp assembly comprises a housing (1) and a lens (2), the housing (1) having a welding rib (4) and a welding area (1a) with a transition ramp (4a, 4b) in between, while the lens (2) has a welding rib (5) and a welding area (2a) with a transition ramp (5a, 5b) in between. When the housing (1) and lens (2) are assembled together, the welding rib of one engages with the welding area of the other while the complementary transition ramps interlock in alignment, such that a welding path that runs continuously from the welding rib (4) of the housing (1) to the welding rib (5) of the lens (2) is formed. Laser welding (6) can then be conducted along the continuous welding path to weld the assembly together.

A component of the lamp assembly and method of joining the lamp assembly are also disclosed.

## Description

### Technical field

The present invention is about automotive lighting, particularly the joining of plastic components used in headlamp assemblies.

### Background art

Current welding methods for joining plastic components in lamp assemblies often utilize a weldable feature in only one of the two components being joined.

Existing methods of welding can lead to material accumulation, particularly when the welding rib needs to be created with a draft angle for manufacturability. This can cause aesthetic issues like sink marks, especially on visible Class A surfaces.

Laser welding is a preferred method due to its strength and lack of vibration, but it can exacerbate the issue of material buildup.

US11331753B2 discloses a simultaneous laser welding equipment for vehicle light. This equipment uses multiple optical fibres to direct laser light to a weld interface between two components of a vehicle light. The light passes through elements that cause it to be reflected and diffused, ensuring even distribution and preventing excessive heat buildup in a small area. This method is said more efficient and cost-effective than traditional laser welding techniques.

US11608958B2 discloses a lighting and/or signalling device with an external decorative element and related assembly method. This device includes a container housing a light source and a decorative element attached to the outside of the container. The method of assembling the decorative element to the container consists in using welding pins and a filling element to create a gap between the decorative element and the container. This gap serves both aesthetic and functional purposes, allowing for liquid drainage and preventing excessive heat buildup during the welding process.

None of these documents addresses the problem of sink marks appearing on Class A surfaces of lamp components, particularly those made of black high-polish material.

### Technical problem

The invention addresses this problem of sink marks. Sink marks are caused by material accumulation at the base of the welding rib, which is exacerbated by the need for draft angles in some vehicle designs.

### Technical solution

A first object of the invention is a **component of a lamp assembly** having a welding rib for assembly with a welding area of a part which is another component of the lamp assembly.

According to the invention, said welding rib has a transition ramp transitioning from the welding rib to the welding area, said transition ramp being intended for use with a complementary ramp of the part, transitioning from the welding area to a welding rib on the part, allowing the component's transition ramp and the part's complementary ramp to fit together by cooperation of their mating surfaces, the ramps being configured for interlocking alignment during assembly so as to create a continuous weld path when the component and the part are joined, that runs continuously from the welding rib of the component to the welding rib of the part.

In the present description, the welding rib having the above characteristics is called a "hybrid welding rib".

In other words, a "hybrid welding rib" is incorporated into both components being joined (the "component" and the "part", the roles of which are exchangeable). This hybrid welding rib distributes the material more evenly, reducing or eliminating the sink marks.

Another object of the invention is a lamp **assembly** comprising at least two components as described above, joined by a hybrid welding rib.

Another object of the invention is a **method of joining** at least a component and a part of a lamp assembly, using a hybrid welding rib, i.e. a welding rib having a transition ramp transitioning from the welding rib to a welding area on the component, said transition ramp being intended for use with a complementary ramp of the part, transitioning from the welding area to a welding rib on the part, allowing the component's transition ramp and the part's complementary ramp to fit together by cooperation of their mating surfaces, the ramps being configured for interlocking alignment during assembly so as to create a continuous weld path when the component and the part are joined, that runs continuously from the welding rib of the component to the welding rib of the part.

The hybrid welding rib of the invention prevents sink marks on Class A surfaces. It reduces material accumulation at the base of the welding rib. Also, it makes it possible to seal properly the assembly at its periphery, thus preventing light leak issues in some cases.

According to a particular embodiment, the welding rib in at least one component is made from a non-reflective material. This mitigates light leak issues in the welding rib.

According to a particular embodiment, the shape of the welding rib is optimized to minimize material accumulation during the welding process. This provides a further reduction of sink marks and improved aesthetics

According to a particular embodiment, the welding process utilizes laser welding. This provides a strong and precise joint with minimal vibration.

According to a particular embodiment, the welding rib has at least one draft angle to reduce material accumulation.

According to a particular embodiment, the components and the other part are a housing and an outer lens.

### Brief description of drawings

The invention will be better understood upon reading the following description, provided only as an illustrative example. The terms "top", "bottom", "front" and "rear" refer to the directions once the lamp assembly is installed on a vehicle oriented in its usual upright position. The following description is with reference to the attached drawings in which:
[Fig. 1] is a perspective view of a lamp assembly.
[Fig. 2] is a cross-section II-II of Fig.1.
[Fig. 3] is a cross-section III-III of Fig.1.
[Fig. 4] is a cross-section IV-IV of Fig.1.
[Fig. 5] is a cross-section V-V of Fig. 1.
[Fig. 6] is a perspective view of the interior of the lens.
[Fig. 7] is a detail VII of Fig.6.
[Fig. 8] is a detail VIII of Fig.6.
[Fig. 9] is a perspective view of the interior of the housing.
[Fig. 10] is a detail X of Fig.9.
[Fig. 11] is a detail XI of Fig.9.
[Fig. 12] is a visual laser welding explanation, when the leg is on the lens.
[Fig. 13] is a visual laser welding explanation, when the leg is on the housing.
[Fig. 14] shows the laser welding outcome with the ramps.

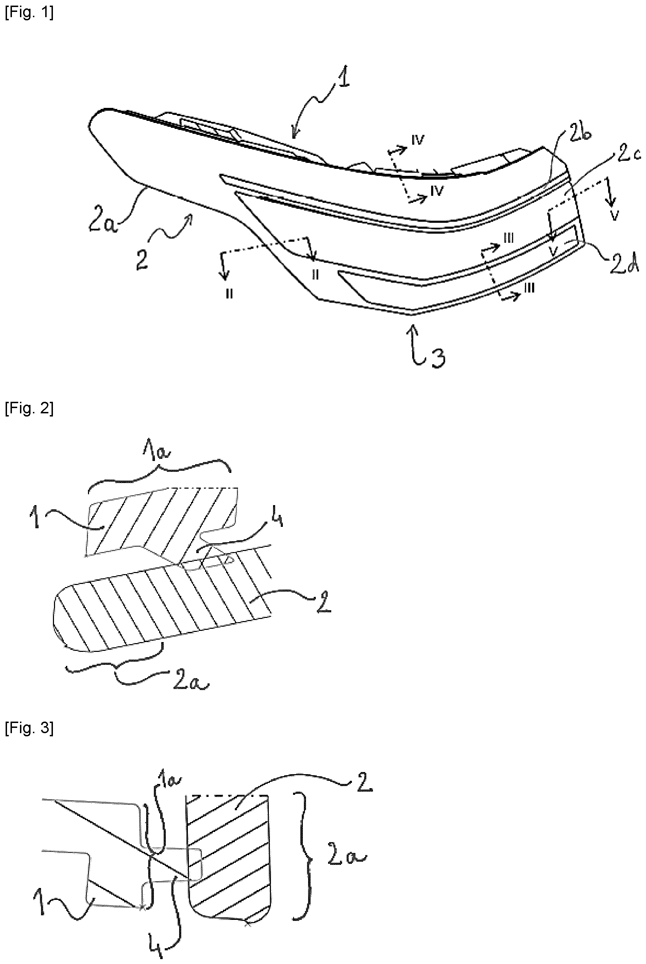

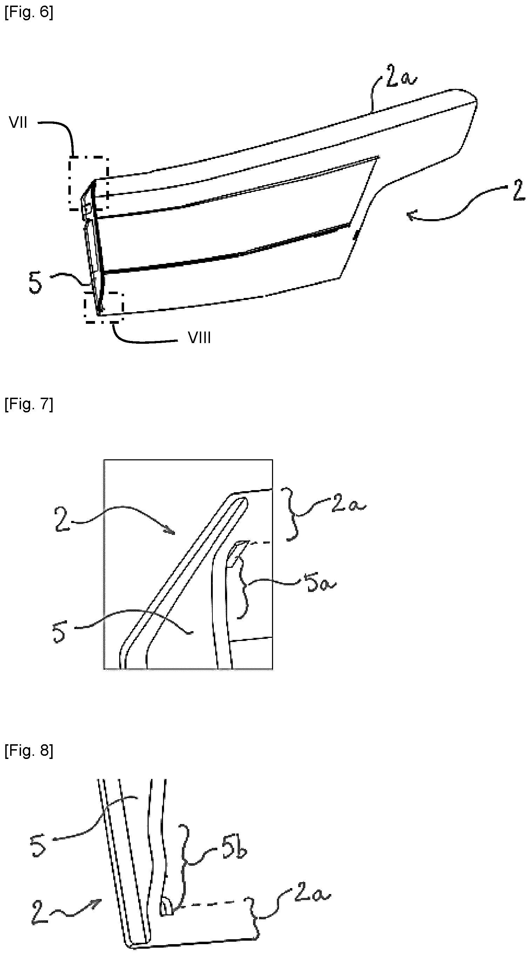

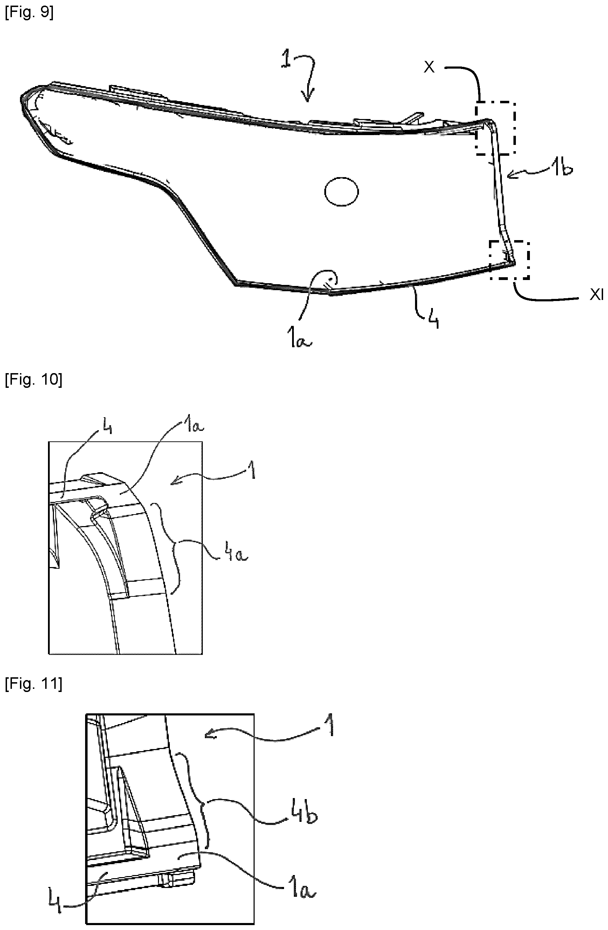

In Fig. 1, the lamp assembly comprises a housing 1 and a lens 2. Both are made from a non-reflective material and are angled, covering a corner 3 of the body of the (non-represented) car. The lens 2 has an exterior face entirely hiding the housing 1, with a surrounding border 2a extending beyond the periphery 1a of the housing (see Fig.6 and Fig. 9).

Stripes 2b, 2c, 2d are delimited on the lens, to show regions where different lights are supposed to appear, such as a daylight running light, a turn light, and low/high beams.

In section II-II of Fig.2, one can see border 2a of the lens 2 overlapping the periphery 1a of the housing 1. A running rib 4 extends along the periphery 1a of the housing, forming a welding leg with the border 2a of the lens 2. The welding leg is made from a non-reflective material. Border 2a forms a welding area.

In section III-III of Fig. 3, one can see border 2a of the lens 2 overlapping the periphery 1a of the housing 1. The same running rib 4 extends along the periphery 1a of housing 1, forming a welding leg with the lens 2. The welding leg is made from a non-reflective material. Periphery 1a forms a welding area.

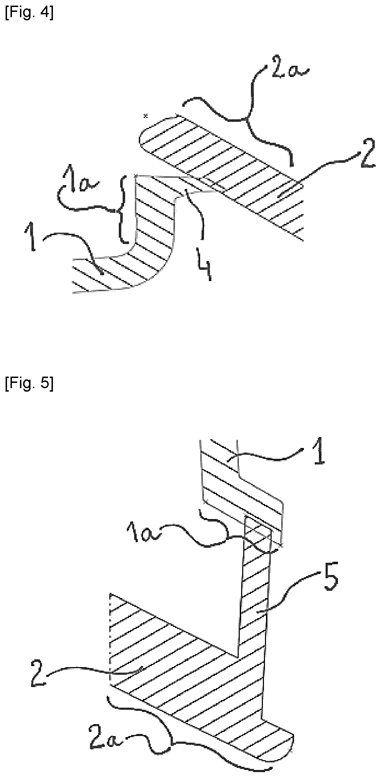

In section IV-IV of Fig. 4, one can see the border 2a of the lens 2 overlapping the periphery 1a of the housing 1. The running rib 4 extends along the periphery 1a of housing 1, forming a welding leg with the lens 2. The thus formed welding rib has a draft angle to reduce material accumulation.

In section V-V of Fig. 5, one can see border 2a of lens 2 overlapping the periphery 1a of the housing 1. Conversely to sections II-II, III-III, and IV-IV, in section V-V, another running rib 5 extends along the border 2a of lens 2, forming a welding leg with border 1a of the housing 1. The thus formed welding rib also has a draft angle to reduce material accumulation. On the perspective view of Fig. 6, from the interior of the lens 2, one can see a flange 5 on the interior side 2b the lens 2, forming a right angle with its front face. Said flange 5 forms the running rib 5 for welding the lens 2 to the housing 1.

As shown in Fig. 9, the interior of the housing has the rib 4 running continuously along its periphery, except on its interior side 1b.

As shown in Figs. 7 and 8, the transition between the running rib 5 of the lens 2, on its interior side 2b, and the border 2a of the lens 2 on the upper and lower sides, is ensured by ramps 5a, 5b provided at the ends of the running rib 5.

As shown in Figs. 10 and 11, the transition between the running rib 4 of the housing, and its periphery 1a on the upper and lower sides, is ensured by ramps 4a, 4b provided at the ends of the running rib 4.

Ramps 5a, 5b and 4a, 4b are facing each other and have complementary shapes. Thanks to said ramps, the running ribs 4 and 5 continuously connect and allow a continuous welding:
- of the welding leg 4 of the housing 1 with the lens 2 around the periphery 1a of the housing 1, except on the interior side 1b,
- of the mating ramps 5a, 5b with mating ramps 4a, 4b at the upper and lower ends of the interior side 1b, and
- of the welding leg 5 of the lens 2 with the housing 1, on the interior side 1b.

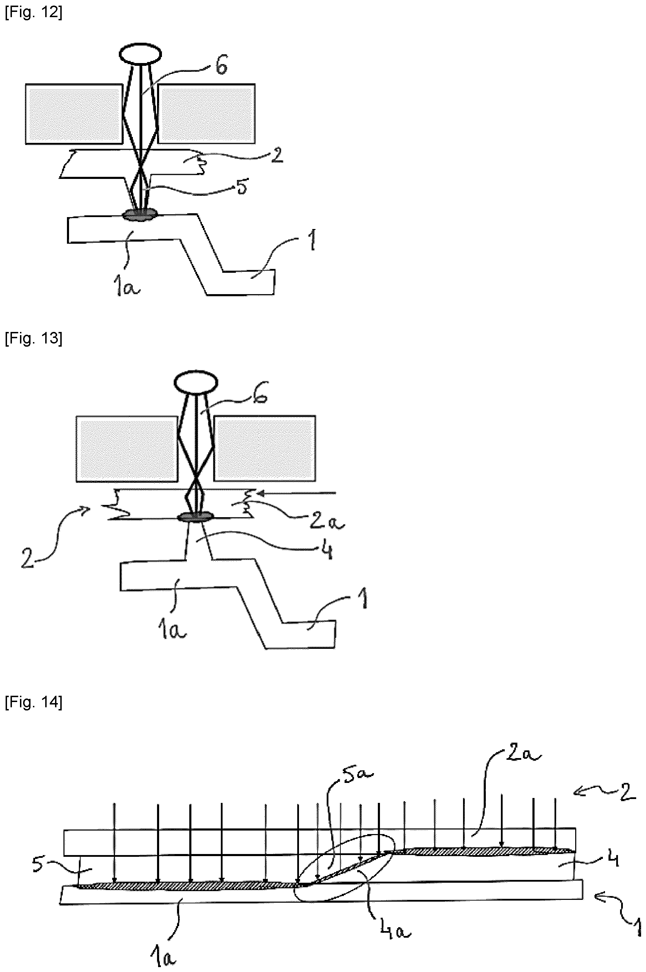

Thanks to the visual laser welding explanation of Figs. 12 and 13, it is clear that when the welding leg 5 is on the lens 2, the laser beam 6 is projected from the front side of the lens 2 and focuses on the end of the welding leg 5 in contact with the periphery 1a of the housing 1. When the welding leg 4 is on the housing 1, the laser beam 6 is also projected from the front side of the lens 2 and focuses on the end of the welding leg 4 in contact with the border 2a of the lens 2.

As shown in Fig. 14, the transition ramps 4a and 5a are designed to allow the running weld zone to bridge the lens welding leg 5 to the housing welding leg 4. The laser is controlled according to adjusted parameters. The person having skill in the art can adjust said parameters, as the welding position evolves. Also, the shape of the welding rib is optimized to minimize material accumulation during the welding process. This can also be done by the person having skill in the art.

In the present description, the housing and the lens each constitute one embodiment of a component to be assembled with another component. They are interchangeable with respect to the welding rib and ramps.

The invention is not limited to the presented embodiments and other embodiments will clearly appear to the skilled person. Any combination of the aforementioned features and their variants is explicitly envisioned.

### List of references

- 1:: housing
- 1a:: periphery
- 1b:: interior side
- 2:: lens
- 2a:: border
- 2b, 2c, 2d:: stripe
- 3:: corner
- 4:: running rib
- 4a, 4b:: ramps
- 5:: running rib
- 5a, 5b:: ramps
- 6:: laser beam

## Claims

1. **Component (1; 2) of a lamp assembly** having a welding rib (4; 5) for assembly with a welding area (2a; 1a) of a part (2; 1) which is another component of the lamp assembly, **characterized in that** said welding rib (4; 5) has a transition ramp (4a, 4b; 5a, 5b) transitioning from the welding rib (4; 5) to the welding area (2a; 1a), said transition ramp (4a, 4b; 5a, 5b) being intended for use with a complementary ramp (5a, 5b; 4a, 4b) of the part (2; 1), transitioning from the welding area (2a; 1a) to a welding rib (5; 4) on the part (2; 1), allowing the component's transition ramp (4a, 4b; 5a, 5b) and the part's complementary ramp (5a, 5b; 4a, 4b) to fit together by cooperation of their mating surfaces, the ramps (4a, 4b; 5a, 5b) being configured for interlocking alignment during assembly so as to create a continuous weld path when the component (1; 2) and the part (2; 1) are joined, that runs continuously from the welding rib (4; 5) of the component (1; 2) to the welding rib (5; 4) of the part (2; 1).

2. Component according to claim 1, wherein the welding rib (4; 5) in at least one component is made from a non-reflective material.

3. Component according to any one of the preceding claims, wherein the shape of the welding rib (4; 5) is optimized to minimize material accumulation during the welding process.

4. Component according to any one of the preceding claims, wherein the welding rib (4; 5) has at least one draft angle to reduce material accumulation.

5. **Lamp assembly** comprising at least two components (1; 2) according to any one of the preceding claims.

6. Lamp assembly according to the preceding claim, wherein the components and the other part are a housing (1) and an outer lens (2).

7. **Method of joining** at least two components (1; 2) of a lamp assembly, using a hybrid welding rib, i.e. a welding rib (4; 5) having a transition ramp (4a, 4b; 5a, 5b) transitioning from the welding rib (4; 5) to a welding area (2a; 1a) on the component (1; 2), said transition ramp (4a, 4b; 5a, 5b) being intended for use with a complementary ramp (5a, 5b; 4a, 4b) of the part (2; 1), transitioning from the welding area (2a; 1a) to a welding rib (5; 4) on the part (2; 1), allowing the component's transition ramp (4a, 4b; 5a, 5b) and the part's complementary ramp (5a, 5b; 4a, 4b) to fit together by cooperation of their mating surfaces, the ramps (4a, 4b; 5a, 5b) being configured for interlocking alignment during assembly so as to create a continuous weld path when the component (1; 2) and the part (2; 1) are joined, that runs continuously from the welding rib (4; 5) of the component (1; 2) to the welding rib (5; 4) of the part (2; 1).

8. Method according to claim 7, utilizing laser (6) welding.
